# EUROPEAN PATENT APPLICATION

(11) **EP 3 222 383 A1**
(43) Date of publication of application: **27.09.2017**
(21) Application number: 17168871.6
(22) Date of filing: 25.03.2014
(51) Int. Cl.: B23K 11/14, B23K 11/18

(54) **METHOD FOR JOINING ALUMINIUM COMPONENTS, IN PARTICULAR FOR CLOSING AN END PART OF A HEATING RADIATOR ELEMENT, AND HEATING RADIATOR ELEMENT**

(30) Priority: 25.03.2013 IT MI20130447
(62) Divisional of application: 14727904.6
(71) Applicant: FONDITAL S.p.A., 25079 Vobarno (IT)
(72) Inventor: NIBOLI, Orlando, 25079 VOBARNO (IT); SASSI, Fabio, 25079 CARPENEDA DI VOBARNO (IT)
(74) Representative: Cernuzzi, Daniele

(57) **Abstract**

In accordance with the invention, a body (2) of an aluminium heating radiator element (1), comprising a substantially tubular end part (6) provided with a bottom opening (8), is closed by a cap (20) via a thermo-electric melting process; the end part (6) and the cap (20) are provided with respective melting portions (21, 22) having respective contact edges (23, 24) which are substantially equal in shape and dimensions, so as to reach the melting state at the same time during the thermo-electric melting process.

## Description

### TECHNICAL FIELD

The present invention relates to a method for joining aluminium components.

The method of the invention has the preferred, but not exclusive, application in the field of aluminium radiator elements. Thus the invention relates, in particular, to a method for closing an end part of an aluminium heating radiator element and to an aluminium heating radiator element made with such a method.

### BACKGROUND ART

As known, an aluminium radiator element, for example, made of die-cast aluminium, typically has a tubular body which extends along an axis and has an end part which, due to construction needs, is bottomly open; the end part therefore has a bottom opening arranged along the axis, in addition to, typically, a pair of lateral opposite holes to allow the connection of the element to other similar elements.

Different systems are known for closing the bottom opening of a radiator element.

In addition to various mechanical systems, which generally use plastic deformation of hooking portions of the cap and/or of the body of the radiator element, it is also known to weld the cap to the body of the radiator element.

However, in the case of aluminium, traditional welding techniques, such as for example flash welding, are not completely satisfactory, as they are relatively costly, slow, complicated and they do not generally allow an adequate mechanical and pressure resistance to be obtained.

These problems are emphasized, more generally, in all cases when there is a need to join two aluminium components.

### DISCLOSURE OF INVENTION

It is an object of the present invention to provide a method for joining aluminium components, which can be used for example as a closure method of an end part of an aluminium heating radiator element, which does not have the drawbacks emphasized by known art; in particular, it is an object of the invention to provide a radiator element having a bottom opening closed in a simple, effective and completely satisfactory manner.

The present invention therefore relates to a method for joining aluminium components, which can be used for example as closure method of an end part of an aluminium heating radiator element, in particular made of die-cast aluminium, and to a radiator element made with such a method, as substantially defined in the appended claims 1 and 11, respectively.

The present invention provides an extremely effective, simple, quick and affordable method for closing the end part of an aluminium radiator element with a cap (also made of aluminium).

The cap is not secured, according to the invention, with a normal welding process; indeed, traditional welding techniques cannot be concretely used with the materials and shapes involved.

In accordance with the invention, the cap and the end part of the radiator element are instead joined via a thermo-electric melting process, performed by circulating current through the pieces to be joined to cause the local melting thereof, without the contribution of welding material.

The cap may have various shapes and dimensions, while it is essential, for the purposes of a proper fastening of the cap (fastening which ensures increased mechanical resistance, increased resistance to pressure and seal), that the contact edges of the cap and the end part of the radiator element are equal in shape and dimensions, so as to reach the melting state at the same time.

In order for the process to provide an effective joining, it is therefore essential for the contact edges of the cap and of the end part of the radiator element to be identical; with different geometries, in particular if the cap and the end part are in contact, when the melting is performed, via respective contact edges which are different in shape and/or dimensions, a truly effective joining is not achieved.

Since the passage from the softening state of the aluminium to the melting thereof occurs in very short periods of time, to obtain the perfect and efficient joining of the cap with the radiator element via the thermo-electric melting system, the contact surfaces must reach the melting state at the same moment. This is ensured by the solution according to the invention.

The invention attains the following advantages with respect to known arts:
- increased resistance to pressure and to tearing: it has been observed that with the method of the invention, the parts (cap and body of the radiator element) become in fact a single body, with increased resistance values to pressure and tearing;
- energy/economic savings: with respect to traditional flash welding systems, by using a thermo-electric melting process, the method of the invention required reduces power consumption. Furthermore, with respect to machines used to perform flash welding, the thermo-electric melting system requires a smaller contribution of compressed air for its operation; therefore, there is overall reduced power consumption and hence economic savings and increased protection of the environment;

- acceleration of the production process: the process of the invention allows the cap to be secured to the body of the radiator element more quickly with respect to traditional flash welding systems;
- no waste of raw material: with a traditional (flash) welding system, part of the raw material (aluminium) of which both components to be welded (cap and body of the radiator element) are formed, is necessarily transformed into slag which, in addition to being unused raw material, is also to be recovered and disposed of, with further increase in costs; with the method of the invention, there is no waste of raw material or production of slags; indeed, the material involved in the processing is only melted, without scraps;
- improvement in the work environment: the method of the invention does not generate fumes during processing, resulting in there being no need for suction; furthermore, with respect to traditional (flash) welding systems, the method of the invention is more noiseless;
- slags and/or burrs are not formed outside the radiator element, as normally occurs with traditional welding techniques (flash welding), with subsequent improved finished appearance;
- welding slags and/or burrs are not even formed inside the radiator element; thus problems are avoided associated with the possible dispersion of slags in the water circuit.

### BRIEF DESCRIPTION OF THE DRAWINGS

Further features and advantages of the present invention will become clear from the description of the following non-limiting embodiments, with reference to the figures of the accompanying drawings, in which:
- figure 1 is a side view of a heating radiator element in accordance with the invention, having an end part provided with a closure cap, shown in a mounting step;
- figure 2 is a longitudinal sectional view of the end part of the radiator element in figure 1;
- figures 3 and 4 are two longitudinal sectional views, according to two orthogonal planes, of a detail of the radiator element of figure 2 and show the cap in mounting configuration and in assembled configuration, respectively;
- figures 5-7 are schematic views in longitudinal section, of various embodiments of the invention;
- figure 8 is a perspective schematic view of a machine for implementing the method in accordance with the invention.

### BEST MODE FOR CARRYING OUT THE INVENTION

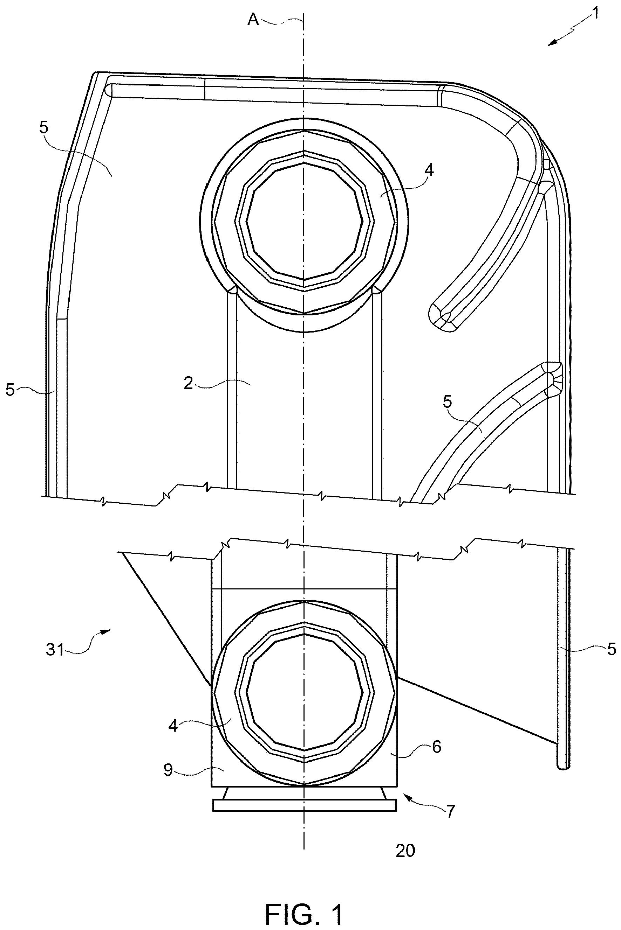

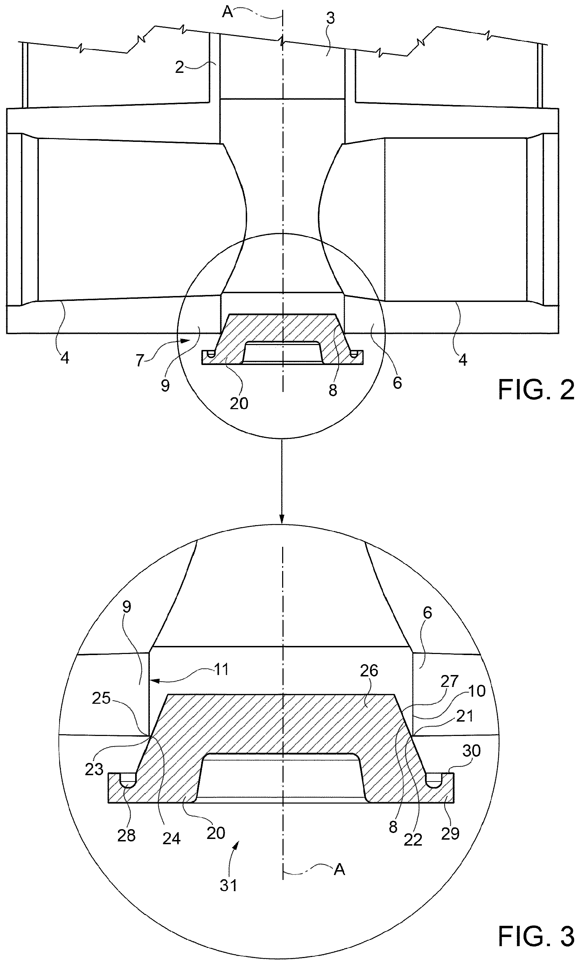

Numeral 1 in figures 1 and 2 indicates an aluminium heating radiator element as a whole, for example made of die-cast aluminium (i.e. made via an aluminium die-casting process); element 1 has a substantially tubular body 2, made of die-cast aluminium and provided with an inner chamber 3 for water circulation; body 2 and the radiator element 1 as a whole extend longitudinally along an axis A which, with reference to the normal position of use of element 1, is substantially vertical; element 1 is provided with transversal connector sleeves 4 for the connection to other radiator elements and/or to a water circuit, and with a plurality of fins and/or radiant plates 5 connected variously to each other and/or to body 2.

Body 2 has, for example, a transversal section, possibly variable along axis A, substantially circular or oval or elliptical, or of another shape again, and comprises an end part 6 arranged at a longitudinal end 7 of element 1, which, with reference to the normal position of use of element 1, may be a lower end or an upper end of element 1.

With reference also to figure 3, the end part 6 is substantially tubular and extends substantially along axis A and has a bottom opening 8 arranged along axis A and substantially transversal to axis A and delimited by an end edge 9. The end part 6 is delimited by a lateral wall 10 which has, for example, but not necessarily, a circular or substantially oval or elliptical transversal section.

The end part 6 is internally provided with a seat 11 communicating with opening 8.

Opening 8 is closed by a cap 20, preferably formed by an aluminium monolithic body extending along and about axis A.

The end part 6 of body 2 and cap 20 have, in a mounting configuration preceding the joining thereof (i.e. before being joined), respective melting portions 21, 22 intended to melt with each other as a result of a thermo-electric melting process (performed without weld material and circulating current through the melting portions 21, 22) and to join intimately with each other, thus ensuring both the mechanical coupling and the hydraulic seal between the end part 6 and cap 20.

In figures 1-3, the end part 6 and cap 20 are shown in the mounting configuration, before being joined with each other.

In the mounting configuration, the melting portions 21, 22 of the end part 6 and of cap 20 project from the end part 6 and from cap 20, respectively, so as to contact each other with respective contact edges 23, 24 which are substantially equal and preferably identical, i.e. they have corresponding shape and dimensions (equal or substantially equal) such as to melt at the same time following the passage of current.

In other words, the melting portions 21, 22 have such a shape as to contact each other along respective contact edges 23, 24 which may be contact profiles (i.e. substantially lines), having substantially the same shape and dimension (length), or contact surfaces, having substantially the same shape and dimension (area).

In the embodiment in figures 1-3, the melting portions 21, 22 contact each other along the respective contact edges 23, 24 defined by respective annular profiles, each of which is substantially defined by a curved line closed in a loop about axis A.

In particular, the melting portion 21 of the end part 6 of body 2 is a portion of the end edge 9; the contact edge 23 of the end part 6 projects from the end edge 9 and is defined by an annular corner 25 set about axis A and opening 8.

Cap 20 comprises a closure portion 26 having a flared lateral surface 27, slanted with respect to axis A and insertable at least partially in seat 11. The melting portion 22 of cap 20 is a portion of the lateral surface 27.

When the closure portion 26 of cap 20 is inserted in seat 11, the melting portion 22 of cap 20 contacts the melting portion 21 of the end part 6; precisely, the contact edge 23 of the end part 6, defined by the annular corner 25, and the contact edge 24 of cap 20, defined by a corresponding annular profile on the lateral surface 27, come in contact.

Rather than a contact profile defined by a corner, the contact edge 23 of the end part 6 of body 2 may alternatively consist of a contact surface, for example defined by a bevel of the end edge 9; the contact edge 23 may for example have an annular surface facing the lateral surface 27 of cap 20 and therefore in turn slanted with respect to axis A, like the lateral surface 27. In this case, cap 20 and the end part 6 contact with respective annular contact surfaces having equal shape and equal dimensions, i.e. having substantially the same area.

Cap 20 is joined to the end part 6 via a thermo-electric melting process which makes integral the melting portions 21, 22 of the end part 6 and of cap 20, as will become apparent below.

Cap 20 is provided, about the contact edge 24, with a collecting groove 28 that serves to collect possible melting slugs that are formed in the thermo-electric melting process.

In the embodiment in figures 1-4, cap 20 comprises a radially outer flange 29 positioned about the closure portion 26. Flange 29 has a front surface 30, facing the end edge 9 and provided with groove 28 which consists of a continuous circumferential slot about axis A.

In use, i.e. when cap 20 has been joined to the end part 6, the closure portion 26 is arranged at least partly in seat 11 inside the end part 6, while flange 29 remains outside seat 11 and rests axially abutting with its front surface 30 against the end edge 9.

Preferably, groove 28 contacts the lateral surface 27 of the closure portion 26.

In accordance with the invention, the bottom opening 8 of the end part 6 is closed with the following method.

Cap 20 is arranged in an initial mounting configuration (shown in figures 1-3) in which the end part 6 and cap 20 contact each other via the respective contact edges 23, 24 to form a preassembled assembly 31.

Cap 20 is partly inserted in seat 11 or is in any event arranged to close opening 8 in front of seat 11; the closure portion 26 of cap 20 penetrates seat 11, through opening 8 until the contact edges 23, 24 contact each other.

The melting portions 21, 22 of the end part 6 and of cap 20 therefore contact each other via respective contact edges 23, 24, while flange 29 is facing the end edge 9 and is axially spaced from the end edge 9.

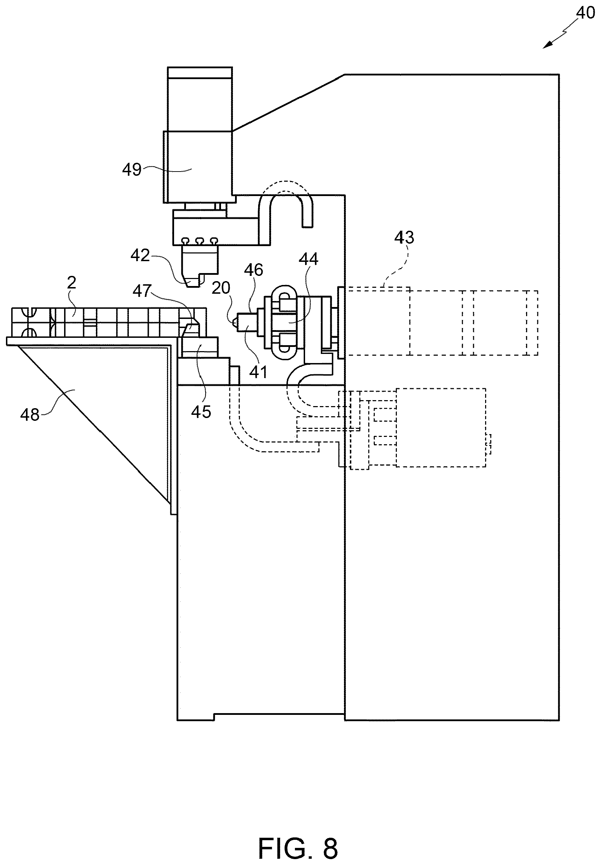

Body 2 and cap 20 are arranged, separately or already preassembled to form assembly 31, on a thermo-electric melting machine 40, shown diagrammatically in figure 8.

Machine 40 comprises a pair of electrodes 41, 42, an electric circuit (not shown) which supplies current of a preset intensity among the electrodes 41, 42, and a compression system 43 having two elements 44, 45 which move (slide) with respect to each other.

Cap 20 and body 2 of the radiator element 1 are positioned on elements 44, 45, respectively; the electrodes 41, 42 are connected to cap 20 and body 2 of the radiator element 1, respectively.

In the non-limiting embodiment shown in figure 8, element 44 comprises a pushing member 46 which moves along axis A and which carries electrode 41; electrode 41 supports cap 20, while holding it for example in a housing via a depression (vacuum) system.

For example, element 45 comprises a vice 47 which holds body 2 fixed on a chuck shelf 48.

Electrode 42 is arranged above shelf 48 and therefore body 2, in particular above the end part 6, and is movable vertically, via a moving system 49, to be carried to contact the end part 6 so as to distribute the current on the whole part which is to be melted.

The compression system 43 operates to push cap 20 towards the end part 6 along axis A; machine 40 is configured so as to supply a current of preset intensity through assembly 31 formed by cap 20 and by body 2 and to apply an axial thrust parallel to axis A which pushes cap 20 against the end part 6 during the passage of current.

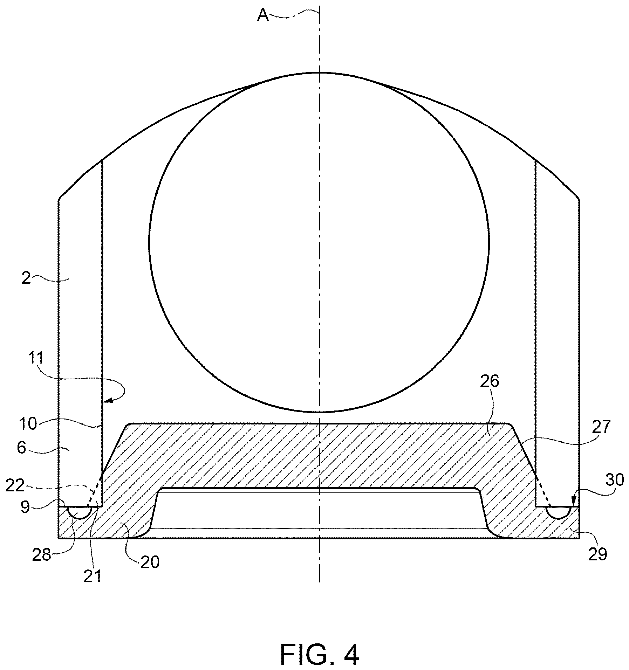

The current flows in cap 20 and in body 2, in particular running through the contact edges 23, 24; the passage of current causes the raising of temperature in the melting portions 21, 22 which melt thus realizing the joining of cap 20 and of the end part 6 (figure 4). At the same time, cap 20 is pushed against the end part 6 (or vice versa) until flange 29 rests axially abutting with its front surface 30 against the end edge 9.

The thermo-electric melting process occurs by circulating current through the melting portions 21, 22 to raise the temperature thereof until the simultaneous melting of the contact edges 23, 24, and without weld material, i.e. using only material of the melting portions 21, 22 caused to melt at the same time, without the contribution of weld material.

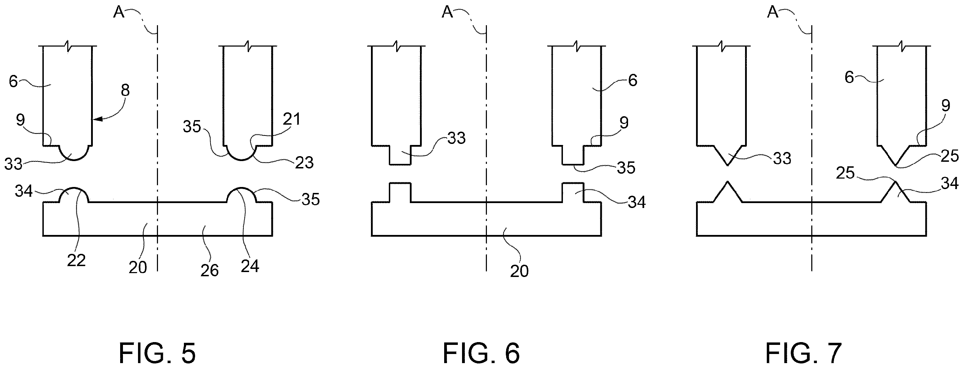

Figures 5-7 exemplify various embodiments of the invention in an extremely diagrammatical form.

The contact edges 23, 24 may have various shapes, so long as the contact edge 23 of the end part 6 of body 2 and the contact edge 24 of cap 20 have substantially the same shape and substantially the same (and preferably identical) dimensions, so as to melt at the same time when the current is applied by the thermo-electric melting machine.

Preferably, as already described, the contact edges 23, 24 substantially consist of profiles or lines; clearly, in these cases too contact between the contact edges 23, 24 occurs concretely on an operating surface (contact between two actual solid bodies along a mono-dimensional line not being possible in practice, especially as industrial products are involved).

In the embodiments in figures 5-7, the end part 6 of body 2 has an annular projection 33 which projects axially from the end edge 9 and is set about axis A and opening 8. Projection 33 is provided with the contact edge 23 of the end part 6.

Cap 20 has a corresponding annular projection 34 which projects from cap 20 towards projection 33 and faces it.

In particular, cap 20 has a substantially flat closure portion 26 perpendicular to axis A, from which projection 34 projects. Projection 34 is symmetrical and mirroring with respect to projection 33, having the same shape and the same dimensions as projection 33, so that the contact edges 23, 24 are equal. The contact edges 23, 24 touch along a closed annular profile.

In the embodiment in figure 5, projection 33 and projection 34 have arch-shaped cross section, for example substantially semi-circular, and therefore have respective opposite outer annular surfaces 35 which are generically convex and facing, and opposite to each other. The contact edges 23, 24 consist of the profiles of the surfaces 35 which touch each other.

In the embodiment in figure 6, projection 33 and projection 34 instead have respective outer annular surfaces 35 which are generically flat and parallel, face each other and are perpendicular to axis A; the contact edges 23, 24 consist of the surfaces 35.

In the embodiment in figure 7, each of the projections 33, 34 has cusp cross section, being defined by a pair of annular sides converging into a corner 25. The corners 25 are equal and opposite. The contact edges 23, 24 consist of the profiles of the corners 25 which touch each other.

It is finally understood that further modifications and variants may be made to the closure method and to the radiator element described and shown herein, which do not depart from the scope of the invention as defined in the appended claims.

## Claims

1. A method for joining aluminium components, in particular for closing an end part (6) of an aluminium heating radiator element (1), comprising the steps of:
- providing a first and a second component (6, 20) made of aluminium to join to each other, provided with respective melting portions (21, 22) having respective contact edges (23, 24);
- placing the two components (6, 20) in a mounting configuration, in which the two components (6, 20) contact each other via the respective contact edges (23, 24) to form an assembly (31);
- performing a thermo-electric melting process of the assembly (31), in which the melting portions (21, 22) contacting each other via the respective contact edges (23, 24) melt and join intimately to make a monolithic piece;
- wherein in the mounting configuration the contact edges (23, 24) of the two components (6, 20) have corresponding shape and dimensions so as to reach the melting state at the same time.

2. A method according to claim 1, wherein in the mounting configuration the contact edges (23, 24) are identical.

3. A method according to claim 1 or 2, wherein the thermo-electric melting process comprises the steps of circulating a current of preset intensity through the assembly (31) and applying an axial thrust for pushing the components (6, 20) one against the other during the passage of current.

4. A method according to claim 3, wherein in the thermo-electric melting process the current supplied in the assembly (31) runs through the contact edges (23, 24) with an intensity such as to cause a raising of the temperature in the melting portions (21, 22), enough to melt said melting portions (21, 22).

5. A method according to one of the preceding claims, wherein in the mounting configuration the melting portions (21, 22) contact each other along the respective contact edges (23, 24) defined by respective annular profiles, each of which is substantially defined by a curved line closed in a loop about the axis (A).

6. A method according to one of the preceding claims, wherein the two components to join are a substantially tubular end part (6), that extends along an axis (A) and has a bottom opening (8) delimited by an end edge (9), of a body (2) of radiator element (1), provided with an inner chamber (3) for water circulation; and a cap (20) shaped so as to close the opening (8), respectively.

7. A method according to claim 6, wherein the contact edge (23) of the end part (6) is defined by an annular corner (25) set about the axis (A).

8. A method according to claim 6 or 7, wherein the cap (20) comprises a closure portion (26) having a flared lateral surface (27), slanted with respect to the axis (A) and insertable at least partially in the seat (11); the melting portion (22) of the cap (20) being a portion of the lateral surface (27) and the contact edge (24) of the cap (20) being defined by an annular profile on the lateral surface (27).

9. A method according to one of claims 6 to 8, wherein the contact edge (23) of the end part (6) of the body (2) consists of an annular surface facing a lateral surface (27) of the cap (20).

10. A method according to one of claims 6 to 9, wherein in the mounting configuration the cap (20) is provided with a collecting groove (28) that serves to collect possible melting slugs that are formed in the thermo-electric melting process.

11. A method according to claim 10, wherein the groove (28) is formed on a radially outer flange (29) of the cap (20).

12. Aluminium radiator element (1) for heating, having a body (2) made of aluminium, provided with an inner chamber (3) for water circulation and comprising a substantially tubular end part (6), that extends along an axis (A) and has a bottom opening (8) delimited by an end edge (9) and closed by a cap (20); the radiator element being **characterized in that** the end part (6) has been closed with the cap (20) by the method according to one of the preceding claims.

13. Radiator element according to claim 12, wherein the end part (6) and the cap (20) are joined intimately to make a monolithic piece through the respective melting portions (21, 22) that are melted together by the thermo-electric melting process.

14. Aluminium radiator element (1) for heating, having a body (2) made of aluminium, provided with an inner chamber (3) for water circulation and comprising a substantially tubular end part (6), that extends along an axis (A) and has a bottom opening (8) delimited by an end edge (9) and closed by a cap (20); the radiator element being **characterized in that** the end part (6) and the cap (20) are joined intimately to make a monolithic piece.
